# EUROPEAN PATENT APPLICATION

(11) **EP 4 656 466 A1**
(43) Date of publication of application: **03.12.2025**
(21) Application number: 25164862.2
(22) Date of filing: 19.03.2025
(51) Int. Cl.: B60R 21/206

(54) **KNEE AIRBAG ATTACHMENT STRUCTURE FOR VEHICLE**

(30) Priority: 28.05.2024 JP 2024086216
(71) Applicant: Suzuki Motor Corporation, Shizuoka 432-8611 (JP)
(72) Inventor: KAMOHARA, Yoshitaka, HAMAMATSU-SHI, 432-8611 (JP)
(74) Representative: Plasseraud IP

(57) **Abstract**

[Problem to be Solved] To relax layout limitations on other equipment in an instrument panel, while maintaining attachment strength of a knee airbag to structure the knee airbag to be able to withstand reaction force at the time of expansion.

[Solution] In a knee airbag attachment structure 1 for a vehicle, a knee airbag unit 5 in which an airbag is expandable toward knee lower parts of an occupant seated on a driver's seat is attached to a steering support member 3 disposed in an instrument panel 2. The steering support member 3 includes a first pipe 31 extending in the vehicle width direction, a second pipe 32 disposed spaced apart further on the vehicle rear side than the first pipe 31 and extending in the vehicle width direction, and first and second stays 33 and 34 extending to a vehicle downward direction from the first and second pipes 31 and 32. The first and second stays 33 and 34 include joining sections J that join each other. The knee airbag unit 5 is attached to a portion corresponding to the joining section J in the second stay 34.

## Description

### [Technical Field]

The present invention relates to a knee airbag attachment structure for a vehicle.

### [Background Art]

Some vehicles, such as automobiles, have mounted therein a knee airbag that expands toward knee lower parts of an occupant seated on a driver's seat or the like. The knee airbag is attached to a steering support member or the like disposed in an instrument panel of the vehicle.

As a knee airbag attachment structure of related art, for example, Patent Literature 1 described below discloses a structure in which a knee airbag module is coupled to, in the vehicle forward direction, an attachment bracket provided in an instrument panel reinforcement (equivalent to the steering support member described above) extending in the vehicle width direction in an instrument panel. In this structure of the related art, the knee airbag module is also coupled to, via an outer bracket, in the outward direction of the vehicle width direction, a vehicle side portion located on the vehicle width direction outer side of the knee airbag module.

With such a structure of the related art, since the knee airbag module is not only coupled to the instrument panel reinforcement via the attachment bracket, but is also coupled to the vehicle side portion via the outer bracket, attachment strength of the knee airbag module to the vehicle is maintained.

### [Citation List]

### [Patent Literature]

[Patent Literature 1] JP 2011-207419 A

### [Summary of Invention]

### [Problem to be Solved by the Invention]

In recent years, electronic equipment and the like disposed in an instrument panel has tended to increase. In such a situation, additionally providing an outer bracket for coupling a knee airbag to a vehicle side portion in the instrument panel as in the structure of the related art is likely to limit layout of other equipment, and there has been room for improvement.

The present invention has been made in view of the point described above, and an object of the present invention is to provide a knee airbag attachment structure for a vehicle that, while maintaining attachment strength of a knee airbag to structure the knee airbag to be able to withstand reaction force at the time of expansion, can reduce layout restrictions on other equipment in an instrument panel.

### [Means for Solving the Problem]

An aspect of the present invention for achieving the object described above provides a knee airbag attachment structure of a vehicle for attaching, to a steering support member disposed in an instrument panel of the vehicle, a knee airbag unit in which an airbag is expandable toward knee lower parts of an occupant seated on a driver's seat of the vehicle. In this knee airbag attachment structure, the steering support member includes: a first pipe extending in a vehicle width direction; a second pipe disposed spaced apart further on a vehicle rear side than the first pipe and extending in the vehicle width direction; a first stay extending in the vehicle downward direction from the first pipe; and a second stay extending in the vehicle downward direction from the second pipe. The first stay and the second stay include joining sections that join each other. The knee airbag unit is attached to a portion corresponding to the joining section in the first stay or the second stay.

### [Advantageous Effect of Invention]

With the knee airbag attachment structure for the vehicle according to the present invention, it is possible to, while maintaining attachment strength of the knee airbag to structure the knee airbag to be able to withstand reaction force at the time of expansion, relaxing layout limitations on other equipment in the instrument panel.

### [Brief Description of Drawings]

[Figure 1] Figure 1 is an exploded perspective view illustrating a schematic structure around a steering support member in a vehicle to which a knee airbag attachment structure according to an embodiment of the present invention is applied.
[Figure 2] Figure 2 is a perspective view in which the periphery of an attachment part of a knee airbag unit in Figure 1 is enlarged and viewed from a vehicle front oblique side.
[Figure 3] Figure 3 is a side view of a state in which an instrument panel and a side bracket are detached in Figure 2 is viewed from a vehicle side.
[Figure 4] Figure 4 is a perspective view in which the state illustrated in Figure 3 is viewed from a vehicle rear oblique side.
[Figure 5] Figure 5 is a perspective view in which the state illustrated in Figure 3 is viewed from a vehicle front oblique side.
[Figure 6] Figure 6 is a rear view in which the state illustrated in Figure 3 is viewed from a vehicle rear.

### [Mode for Carrying Out the Invention]

An embodiment of the present invention is explained in detail below with reference to the accompanying drawings.

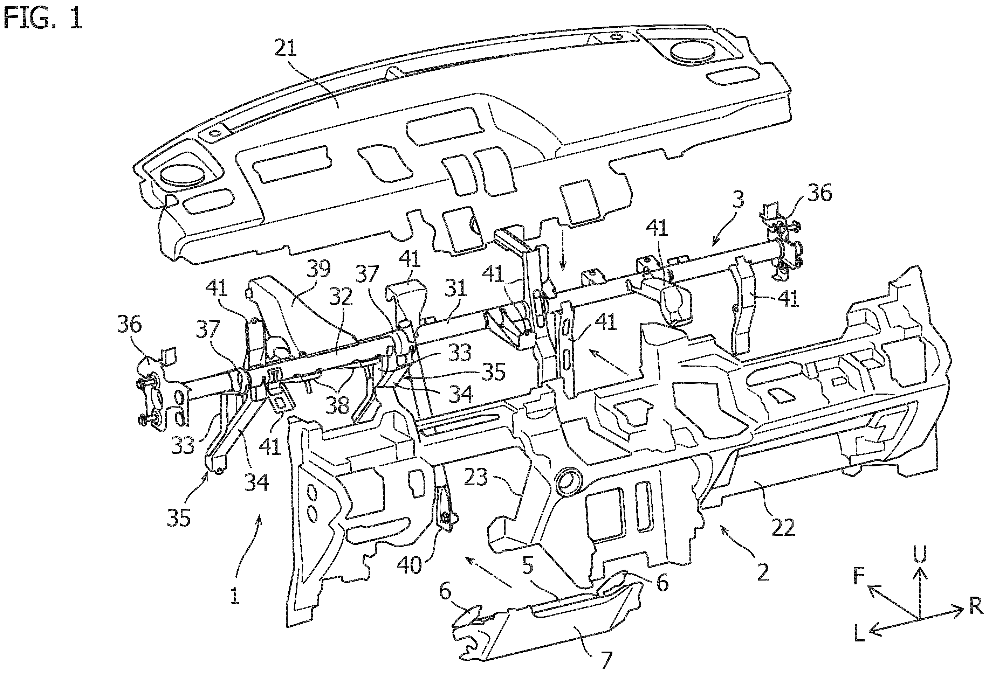

Figure 1 is an exploded perspective view illustrating a schematic structure around a steering support member 3 in a vehicle to which a knee airbag attachment structure 1 according to an embodiment of the present invention is applied. Note that, in the figures explained below, an arrow F direction indicates the front in the vehicle front-rear direction, an arrow U direction indicates upward in the vehicle up-down direction, and an arrow R direction and an arrow L direction indicate the right and the left at the time when the vehicle front is viewed from a vehicle interior.

The knee airbag attachment structure 1 in the present embodiment is applied to a vehicle such as an automobile. An instrument panel 2 formed using a resin material or the like is provided in a front portion in the vehicle interior in this vehicle. The instrument panel 2 includes, as illustrated in Figure 1, an upper panel 21 facing the vehicle upward direction and a lower panel 22 facing the vehicle rear and fronting on a driver's seat and an assistant driver's seat (not illustrated). The steering support member 3 extending in the vehicle width direction is disposed on the inside of the instrument panel 2, that is, in a space on the vehicle exterior side located below the upper panel 21 and in the front of the lower panel 22.

A column hole 23 through which steering columns (not illustrated) are inserted is formed in a portion on the driver's seat side (in Figure 1, the left side) in the lower panel 22 of the instrument panel 2. A knee airbag unit 5 attached to the steering support member 3 by the knee airbag attachment structure 1 according to the present embodiment is disposed on the lower portion front side of the column hole 23.

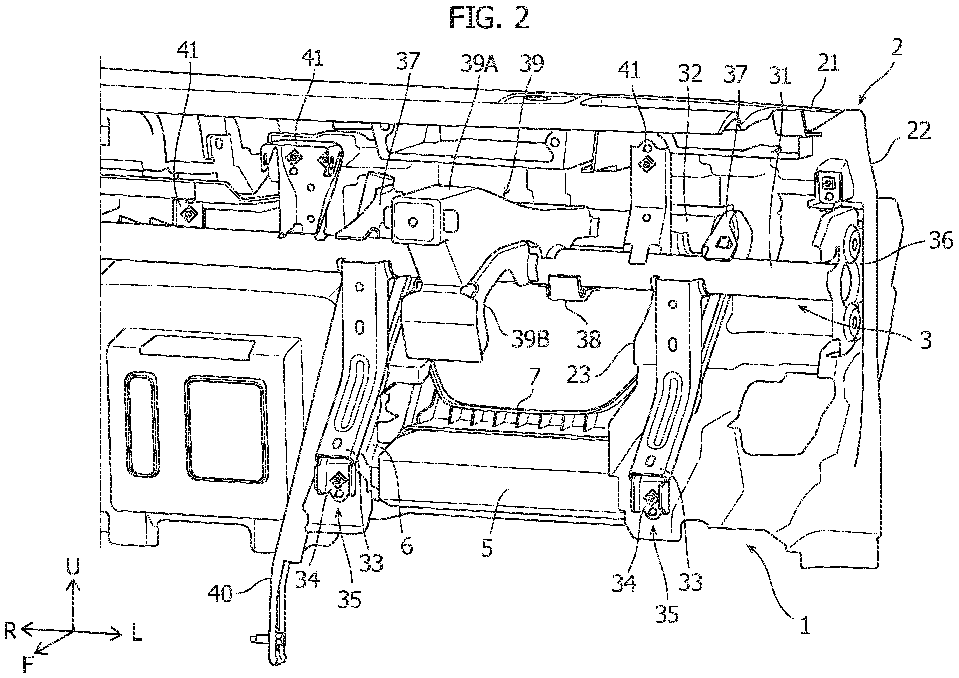

Here, details of the knee airbag attachment structure 1 according to the present embodiment are specifically explained with reference to Figure 2 to Figure 6 as well.

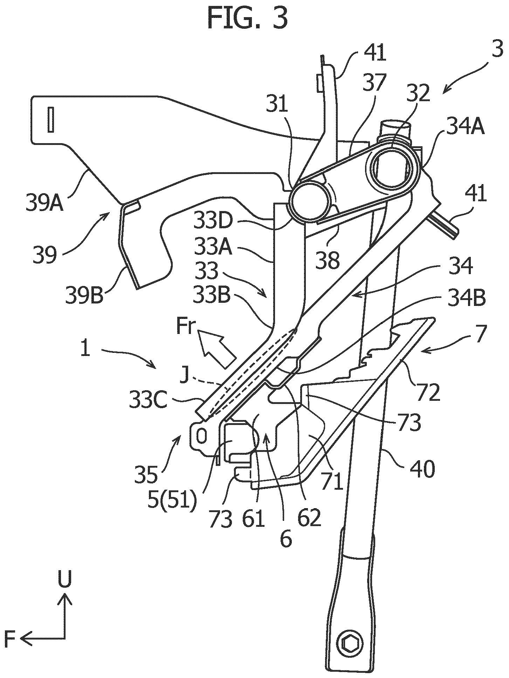

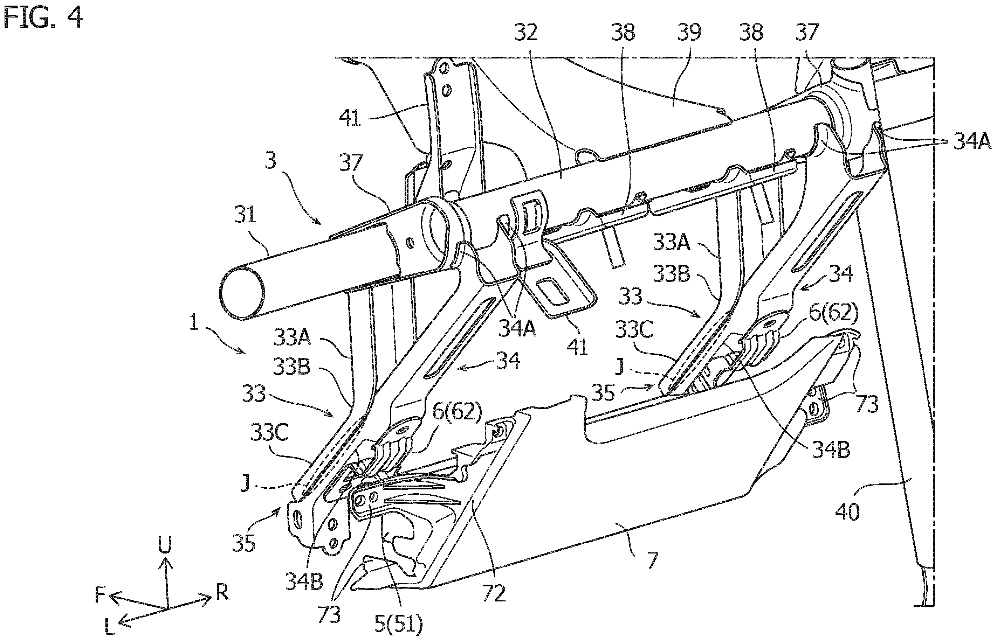

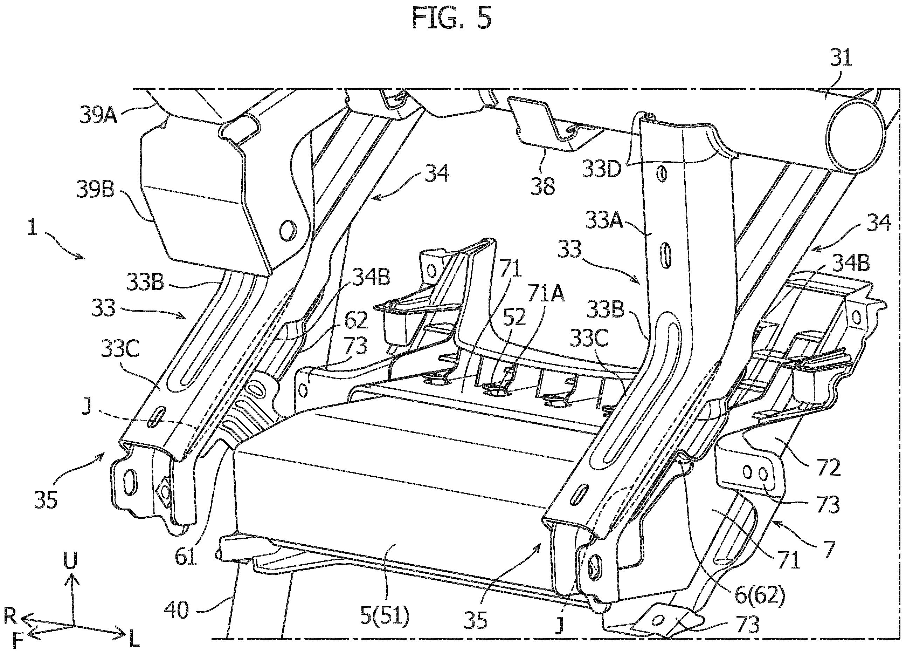

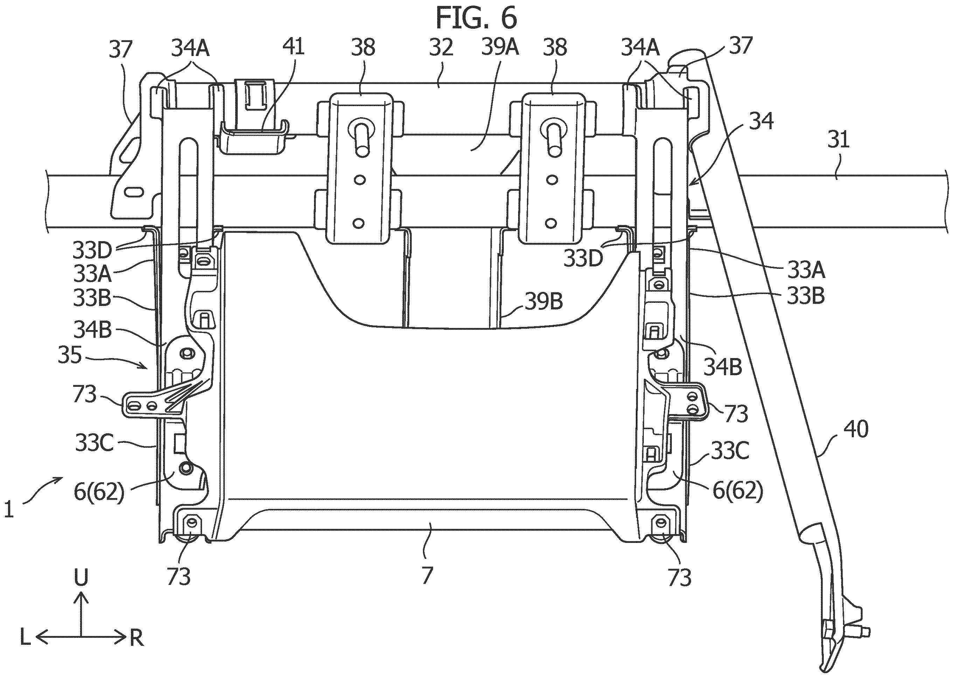

Figure 2 is a perspective view in which the periphery of an attachment part of the knee airbag unit 5 in Figure 1 is enlarged and viewed from a vehicle front oblique side. Note that, in Figure 2, a state in which the instrument panel 2 and the knee airbag unit 5 are attached to the steering support member 3 is illustrated. Figure 3 is a side view in which a state in which the instrument panel 2 and a side bracket 36 explained below are detached in Figure 2 is viewed from a vehicle side. Furthermore, Figure 4 is a perspective view in which the state illustrated in Figure 3 is viewed from a vehicle rear oblique side, Figure 5 is a perspective view in which the state illustrated in Figure 3 is viewed from a vehicle front oblique side, and Figure 6 is a rear view in which the state illustrated in Figure 3 is viewed from a vehicle rear.

The steering support member 3 to which the knee airbag unit 5 is attached in the present embodiment is a vehicle body side component made of metal having high rigidity. The steering support member 3 includes a first pipe 31 extending in the vehicle width direction, a second pipe 32 disposed spaced apart further on the vehicle rear side than the first pipe 31 and extending in the vehicle width direction, first stays 33 extending in the vehicle downward direction from the first pipe 31, and second stays 34 extending in the vehicle downward direction from the second pipe 32 (Figure 1 to Figure 6). In the present embodiment, two stay units 35 obtained by combining the first stays 33 and the second stays 34 are provided spaced apart in the vehicle width direction at positions corresponding to a column hole 23 of the instrument panel 2 (the lower panel 22) (Figure 1 and Figure 2). An interval between the stay units 35 on the left and the right is designed to correspond to the length (the total width) in the vehicle width direction of the knee airbag unit 5. Note that details of the stay units 35 are explained below.

The first pipe 31 extends in the vehicle width direction at a position below the upper panel 21 and in the front of the lower panel 22 in the instrument panel 2. Both end portions in the longitudinal direction (the vehicle width direction) of the first pipe 31 are fixed, using the side bracket 36 explained above, to a dash side panel (not illustrated) configuring a vehicle body side portion (Figure 1 and Figure 2).

The second pipe 32 is located between the first pipe 31 and the instrument panel 2 (the lower panel 22) in the vehicle width direction view and is disposed to overlap the periphery of the upper edge portion of the column hole 23 in the instrument panel 2 (the lower panel 22) in the vehicle front-rear direction view. The length in the vehicle width direction of the second pipe 32 is designed to generally correspond to the length in the vehicle width direction of the column hole 23 and is smaller than half of the length in the vehicle width direction of the first pipe 31. The two vehicle width direction end portions of the second pipe 32 are coupled to, respectively via a pair of coupling members 37, a left side portion located in the driver's seat front in the first pipe 31.

The coupling members 37 extend generally in the vehicle front-rear direction and the front end portions of the coupling members 37 are fixed to an upper portion and a lower portion of the first pipe 31 by welding or the like and the rear end portions of the coupling members 37 are fixed to the outer circumferential surface of the second pipe 32 by welding or the like (Figure 2 to Figure 4). Between the pair of coupling members 37, a pair of steering column brackets 38 to which the steering columns explained above are coupled is disposed spaced apart in the vehicle width direction (Figure 1, Figure 4 and Figure 6). The steering column brackets 38 extend in the front-rear direction to connect the first pipe 31 and the second pipe 32 and front end portions of the steering column brackets 38 are fixed to a lower portion of the first pipe 31 by welding or the like and rear end portions of the steering column brackets 38 are fixed to a lower portion of the second pipe 32 by welding or the like (Figure 6).

Between the pair of steering column brackets 38, a front member 39 extending to the vehicle front from the first pipe 31 and the second pipe 32 and coupled to a dash panel (not illustrated) of the vehicle is provided (Figure 1 to Figure 3). The front member 39 in the present embodiment includes an upper member 39A and a lower member 39B (Figure 2 and Figure 3). A rear portion of the upper member 39A is fixed across upper portions of the first pipe 31 and the second pipe 32 by welding or the like. The upper member 39A extends to the front from the fixed part. A front end portion of the upper member 39A is fastened to the dash panel by a bolt or the like. A rear portion of the lower member 39B is fixed to a front portion of the first pipe 31 by welding or the like. The lower member 39B extends to the front along the lower surface portion of the upper member 39A from the fixed part.

Furthermore, a lower member 40 is coupled to, of the pair of coupling members 37, the coupling member 37 on the vehicle width direction inner side (the right side) (Figure 1 to Figure 6). The lower member 40 extends in the vehicle up-down direction and the upper end portion of the lower member 40 is fixed to the rear end side portion of the coupling member 37 by welding or the like, and the lower end portion of the lower member 40 is fastened to a vehicle body component (not illustrated) on a floor panel side by a bolt or the like.

As explained above, the vehicle width direction both end portions of the first pipe 31 of the steering support member 3 are supported by the dash side panel of the vehicle body side portion via the side bracket 36 and the intermediate portion in the vehicle width direction of the first pipe 31 is supported by the dash panel via the front member 39 and supported by the vehicle body component on the floor panel side via the coupling members 37 and the lower member 40.

In the steering support member 3, besides the left and right stay units 35 that support the knee airbag unit 5, a plurality of instrument panel stays 41 for supporting the upper panel 21 or the lower panel 22 of the instrument panel 2 are fixed to the first pipe 31 and the second pipe 32 by welding or the like (Figure 1 and Figure 2). The instrument panel stays 41 respectively extend to a side on which the instrument panel 2 is installed (the vehicle upward direction or the vehicle rear) from the first pipe 31 or the second pipe 32 and disposed to be distributed in the vehicle width direction.

Here, a detailed structure of the left and right stay units 35 that support the knee airbag unit 5 is explained with reference to Figure 2 to Figure 6. In the present embodiment, the first stay 33 and the second stay 34 forming the stay unit 35 on the right side and the first stay 33 and the second stay 34 forming the stay unit 35 on the left side have the same shape.

The first stay 33 includes a base section 33A extending in the vehicle downward direction from the first pipe 31 and an inclined section 33C connected to the lower end portion of the base section 33A via a curved section 33B and extending to incline to the vehicle front toward the vehicle downward direction (Figure 3 to Figure 5). The first stay 33 is formed to have a substantial L shape in the vehicle width direction view by curving, near the center in the longitudinal direction, a sheet metal member bent in a substantially U shape in cross section and extending in one direction.

Specifically, the base section 33A of the first stay 33 has a substantially U-shaped cross section open to the vehicle rear. A flange section 33D projecting in the vehicle width direction is formed at the upper end portion of the base section 33A. The flange section 33D is fixed to a front side lower portion on the outer circumferential surface of the first pipe 31 by welding or the like. The curved section 33B is continuously formed at the lower end portion of the base section 33A. The curved section 33B is formed to gradually curve to the vehicle front while maintaining the sectional shape of the base section 33A. The inclined section 33C continuing to the front end portion of the curved section 33B has a substantially U-shaped cross section open to the vehicle lower oblique rear. Bead treatment is applied to the first stay 33 in the present embodiment from the curved section 33B to near the longitudinal direction center of the inclined section 33C and the strength of the first stay 33 is increased (Figure 2 and Figure 5).

The second stay 34 extends straight and inclines to the vehicle front toward the vehicle downward direction from the second pipe 32 and has a substantially U-shaped cross section open to the vehicle front oblique upward direction (Figure 3 to Figiure 5). A flange section 34A projecting in the vehicle width direction is formed at the upper end portion of the second stay 34. The flange section 34A is fixed across a rear side lower portion on the outer circumferential surface of the second pipe 32 and a rear surface lower portion of the coupling member 37 by welding or the like (Figure 3, Figure 4, and Figure 6). The lower end portion of the second stay 34 is curved to the vehicle lower side and has a substantially U-shaped cross section open to the vehicle front.

A front side portion of a lower section 34B in the second stay 34 is joined to a rear side portion of the inclined section 33C in the first stay 33. In the present embodiment, the lower section 34B of the second stay 34 having a substantially U-shaped cross section open to the vehicle front oblique upward direction is disposed to enter the inner side of the inclined section 33C having a substantially U-shaped cross section open to the vehicle rear oblique downward direction in the first stay 33. Specifically, at least parts of the outer side surfaces of sidewalls facing the vehicle width direction in the lower section 34B of the second stay 34 are joined to at least parts of the inner side surfaces of sidewalls facing the vehicle width direction in the inclined section 33C of the first stay 33 and fixed by welding or the like. That is, the first stay 33 and the second stay 34 include joining sections J (broken line portions in Figure 3 to Figure 5) that join each other.

The knee airbag unit 5 is attached to a position corresponding to the joining section J to the first stay 33 in the second stay 34 using knee airbag brackets 6. In the present embodiment, a seat surface for fixing the knee airbag brackets 6 is provided in a rear side portion located on the opposite side to a front side portion joined to the first stay 33 in the lower section 34B of the second stay 34 (Figure 3 to Figure 6).

The knee airbag unit 5 is configured such that the airbag is expandable toward the knee lower parts of an occupant seated on the driver's seat. The knee airbag unit 5 in the present embodiment includes a main body case 51 formed in a laterally elongated box shape. A folded airbag (not illustrated) and an inflator (not illustrated) that supplies gas for expansion to the airbag are housed in the main body case 51 (Figure 3 to Figure 5). A left and right pair of knee airbag brackets 6 are respectively fixed to the two vehicle width direction side surfaces of the main body case 51 by welding or the like. An opening (not illustrated) for expanding the airbag, which has received the supply of the gas from the inflator, to the outside of the case is formed on the rear side surface of the main body case 51. The opening of the main body case 51 is covered by a knee airbag cover 7.

The knee airbag brackets 6 include extending sections 61 extending toward the vehicle front oblique upward direction from the vehicle width direction side surface of the knee airbag unit 5 (the main body case 51) and flange sections 62 projecting in the vehicle width direction from the distal end portions of the extending sections 61 (Figure 3 to Figure 6). The flange sections 62 extend and incline to the vehicle rear toward the vehicle upward direction along the lower sections 34B of the second stays 34. Intermediate portions in the longitudinal direction of the flange sections 62 recess to the vehicle rear side and both end portions of the flange sections 62 are joined to seat surfaces of rear side portions in the lower sections 34B of the second stays 34 and fixed by bolts or the like (Figure 3 and Figure 4). Bead treatments are respectively applied to the extending sections 61 and the flange sections 62 of the knee airbag brackets 6 and the strength of the knee airbag brackets 6 is increased (Figure 4 to Figure 6).

The knee airbag cover 7 is provided to cover the opening of the knee airbag unit 5 from the vehicle rear side. The knee airbag cover 7 is disposed in a lower portion of the column hole 23 formed in the instrument panel 2 and a rear surface portion of the knee airbag cover 7 facing the vehicle interior forms a design surface of the knee airbag cover 7 (Figure 1). The knee airbag cover 7 in the present embodiment includes a surrounding wall section 71 that extends to the front from a front surface portion disposed to face the opening of the knee airbag unit 5 and is formed to surround at least the rear end portion of the knee airbag unit 5 (Figure 3 and Figure 5).

A plurality of engaging holes 71A piercing in the up-down direction are formed spaced apart in the vehicle width direction in an upper wall portion of the surrounding wall section 71 (Figure 5). A plurality of engaging claws 52 provided on an upper portion rear side of the knee airbag unit 5 are engageable in the engaging holes 71A. The knee airbag cover 7 includes an outer wall section 72 projecting to the vehicle front from a vehicle width direction outer side edge of the rear surface portion (the design surface) and extending to incline to the front toward the downward direction (Figure 4 to Figure 6). Furthermore, a plurality of leg sections 73 extending to the vehicle width direction outer side from the outer wall section 72 and fixed to the lower panel 22 of the instrument panel 2 are provided in the knee airbag cover 7 (Figure 3 to Figure 6).

Next, action of the knee airbag attachment structure 1 according to the present embodiment is explained.

As explained above, in the knee airbag attachment structure 1 according to the present embodiment, the knee airbag unit 5, the opening of which is covered by the knee airbag cover 7, is attached to, via the knee airbag brackets 6, the left and right stay units 35 formed by combining the first and second stays 33 and 34 fixed to the first and second pipes 31 and 32 of the steering support member 3.

When shock of a predetermined level or higher is applied to the knee airbag unit 5 supported by the left and right stay units 35 of the steering support member 3 as explained above, the gas is instantaneously supplied from the inflator to the airbag of the knee airbag unit 5 and, while breaking the knee airbag cover 7, the airbag expands toward the knee lower parts of the occupant seated on the driver's seat, whereby the knee lower parts of the occupant are protected.

At this time, reaction force facing the vehicle front acts on the knee airbag unit 5 according to the expansion of the airbag. This reaction force is transmitted to the left and right stay units 35 via the knee airbag brackets 6 coupled to the two vehicle width direction side portions of the knee airbag unit 5. Accordingly, the stay units 35 respectively receive, near the joining sections J, reaction force Fr facing the vehicle front oblique upward direction indicated by a white arrow in Figure 3. This reaction force Fr is transmitted to the first pipe 31 via the first stays 33 and transmitted to the second pipe 32 via the second stays 34.

The first and second pipes 31 and 32 are coupled by the pair of coupling members 37 and the pair of steering column brackets 38 and are further supported by vehicle body sections via the left and right side brackets 36, the front member 39, and the lower member 40. For this reason, a force transmitted to the first and second pipes 31 and 32 because of the reaction force at the airbag expansion time is securely received by the side brackets 36, the front member 39, and the lower member 40 connected to the vehicle body side.

At the time of the expansion of the airbag, the knee airbag cover 7 is about to move to the vehicle rear by being pushed by the expanding airbag. However, the engaging claws 52 provided in the knee airbag unit 5 engage in the engaging holes 71A formed in the surrounding wall section 71 of the knee airbag cover 7, whereby the movement of the knee airbag cover 7 to the vehicle rear is reduced. When the expansion of the airbag continues, a cleavage line section (not illustrated) formed in the knee airbag cover 7 ruptures and the airbag expands toward the knee lower parts of the occupant.

As explained above, in the knee airbag attachment structure 1 according to the present embodiment, the first and second stays 33 and 34 extending in the vehicle downward direction from the first and second pipes 31 and 32 of the steering support member 3 include the joining sections J that join each other. The knee airbag unit 5 is attached to portions corresponding to the joining sections J in the second stays 34. With such an attachment structure 1, reaction force of the knee airbag unit 5 that occurs at the time of the expansion of the airbag can be received by each of the first and second stays 33 and 34. Accordingly, it is possible to, without additionally providing an outer bracket for coupling the knee airbag having the structure of the related art explained above to the vehicle side portion, implement a structure that can maintain the attachment strength of the knee airbag unit 5 and withstand the reaction force at the time of the expansion. Since the knee airbag unit 5 is supported by the first and second stays 33 and 34 extending in the vehicle downward direction from the first and second pipes 31 and 32 of the steering support member 3 extending in the vehicle width direction in the instrument panel 2, it is possible to relax layout restrictions on other equipment in the instrument panel 2.

In the knee airbag attachment structure 1 according to the present embodiment, the first stay 33 includes the base section 33A, the curved section 33B, and the inclined section 33C. The second stay 34 extends straight to incline to the vehicle front toward the vehicle downward direction from the second pipe 32. The front side portion of the lower section 34B in the second stay 34 is joined to the rear side portion of the inclined section 33C in the first stay 33. The knee airbag unit 5 is fixed to the rear side portion of the lower section 34B in the second stay 34. With such an attachment structure 1, since the second stay 34 extends straight while inclining, there is no portion that becomes a start point of a fold or a bend of the second stay 34 when receiving the reaction force Fr due to the expansion of the airbag. For this reason, the reaction force of the knee airbag unit 5 can be efficiently received by the second stay 34. Furthermore, for the first stay 33 as well, since a portion between the base section 33A and the inclined section 33C is formed in a curved shape that less easily becomes a start point of a bend when receiving the reaction force at the airbag expansion time, the reaction force of the knee airbag unit 5 can be efficiently received by the first stay 33. In particular, if the bead treatment is applied from the curved section 33B to near the longitudinal direction center of the inclined section 33C as in the present embodiment, it is possible to effectively reduce a bend in the curved section 33B.

In the knee airbag attachment structure 1 according to the present embodiment, the two stay units 35 obtained by combining the first stays 33 and the second stays 34 are provided spaced apart in the vehicle width direction. The left and right stay units 35 have the same shape. With such a structure, since the left and right stay units 35 supporting the knee airbag unit 5 have the same rigidity in the respective directions, when the airbag expands, movement of a direction of the expansion centering on a vertical axis passing the center between the left and right stay units 35 can be reduced. That is, when the left and right stay units 35 have different shapes, the stay units 35 are deformed (bent) differently by the reaction force at the airbag expansion time. In this case, twisted movement of the knee airbag unit 5 occurs and the expanding direction of the airbag moves at least around the vertical axis. If the left and right stay units 35 have the same shape, such fluctuation of the expanding direction can be reduced. That is, the expanding direction of the knee airbag unit 5 can be stabilized. Furthermore, since the left and right stay units 35 supporting the knee airbag unit 5 have the same shape, it is also possible to easily design an attachment position of the knee airbag unit 5. For example, if the center position in the vehicle width direction of the knee airbag unit 5 is disposed in the center between the left and right stay units 35, it is possible to easily determine an attachment position of the knee airbag unit 5 at which the reaction force at the airbag expansion time acts equally on the left and right stay units 35.

In the knee airbag attachment structure 1 according to the present embodiment, the first and second pipes 31 and 32 are coupled by the coupling members 37 and the upper end portions of the second stays 34 are fixed across the second pipe 32 and the coupling members 37. With such a structure, the reaction force Fr transmitted to the stay units 35 by the reaction force at the airbag expansion time can be more securely received by the first and second pipes 31 and 32 and the coupling members 37.

In the knee airbag attachment structure 1 according to the present embodiment, the pair of steering column brackets 38 to which the steering columns are respectively coupled is disposed between the pair of coupling members 37 that respectively couples the both end portions in the vehicle width direction in the second pipe 32 to the first pipe 31, and furthermore, the front member 39 extending to the vehicle front from the first and second pipes 31 and 32 and fixed to the dash panel is disposed between the pair of steering column brackets 38. In addition, the lower member 40 extending in the vehicle downward direction from the coupling member 37 on the vehicle width direction inner side is fixed to the vehicle body component on the floor panel side. With such a structure, a force transmitted to the first and second pipes 31 and 32 by the reaction force at the airbag expansion time can be more reliably received by the front member 39 and the lower member 40 connected to the vehicle body side. In particular, since the front member 39 is disposed between the pair of steering column brackets 38 having high rigidity capable of supporting the steering columns that are heavy objects, it is possible to implement a tough structure that can sufficiently withstand the reaction force at the airbag expansion time.

The embodiment of the present invention is explained above. However, the present invention is not limited to the embodiment explained above. Various modifications and changes are possible based on the technical concept of the present invention.

For example, in the embodiment explained above, an example is explained in which the knee airbag unit 5 is fixed to the rear side portions of the lower sections 34B in the second stays 34. However, when the knee airbag unit 5 is attached to a portion corresponding to the joining sections J in the first stays 33, it is also possible to obtain the same effects as in the case of the embodiment explained above.

In the embodiment explained above, an example is explained in which the two stay units 35 obtained by combining the first and second stays 33 and 34 are provided spaced apart in the vehicle width direction. However, one or three or more stay units may be provided to support the knee airbag unit 5.

### [Reference Signs List]

- 1: Knee airbag attachment structure
- 2: Instrument panel
- 21: Upper panel
- 22: Lower panel
- 23: Column hole
- 3: Steering support member
- 31: First pipe
- 32: Second pipe
- 33: First stay
- 33A: Base section
- 33B: Curved section
- 33C: Inclined section
- 33D: Flange section
- 34: Second stay
- 34A: Flange section (upper end portion)
- 34B: Lower section
- 35: Stay unit
- 36: Side bracket
- 37: Coupling member
- 38: Steering column bracket
- 39: Front member
- 40: Lower member
- 41: Instrument panel stay
- 5: Knee airbag unit
- 51: Main body case
- 52: Engaging claw
- 6: Knee airbag bracket
- 61: Extending section
- 62: Flange section
- 7: Knee airbag cover
- 71: Surrounding wall section
- 71A: Engaging hole
- 72: Outer wall section
- 73: Leg section
- Fr: Reaction force
- J: Joining section

## Claims

1. A knee airbag attachment structure for a vehicle for attaching, to a steering support member disposed in an instrument panel of the vehicle, a knee airbag unit in which an airbag is expandable toward knee lower parts of an occupant seated on a driver's seat of the vehicle, **characterized in that**
the steering support member includes:
a first pipe extending in a vehicle width direction;
a second pipe disposed spaced apart further on a vehicle rear side than the first pipe and extending in the vehicle width direction;
a first stay extending to a vehicle downward direction from the first pipe; and
a second stay extending in the vehicle downward direction from the second pipe,
the first stay and the second stay include joining sections that join each other, and
the knee airbag unit is attached to a portion corresponding to the joining section in the first stay or the second stay.

2. The knee airbag attachment structure for the vehicle according to claim 1, wherein
the first stay includes a base section extending in the vehicle downward direction from the first pipe and an inclined section connected to a lower end portion of the base section via a curved section and extending to incline to a vehicle front toward the vehicle downward direction,
the second stay extends straight and inclines to the vehicle front toward the vehicle downward direction from the second pipe, and a front side portion of a lower portion in the second stay is joined to a rear side portion of the inclined section in the first stay, and
the knee airbag unit is fixed to a rear side portion of the lower portion in the second stay.

3. The knee airbag attachment structure for the vehicle according to claim 2, wherein two stay units obtained by combining the first stay and the second stay are provided spaced apart in the vehicle width direction, and the two stay units have a same shape.

4. The knee airbag attachment structure for the vehicle according to claim 1, wherein
the steering support member includes a coupling member that couples the first pipe and the second pipe, and
an upper end portion of the second stay is fixed across the second pipe and the coupling member.

5. The knee airbag attachment structure for the vehicle according to claim 1, wherein the steering support member includes:
a pair of coupling members that respectively couples both end portions in the vehicle width direction in the second pipe to the first pipe;
a pair of steering column brackets disposed spaced apart in the vehicle width direction between the pair of coupling members and connecting the first pipe and the second pipe, steering columns of the vehicle being respectively coupled to the pair of steering column brackets;
a front member disposed between the pair of steering column brackets, extending to a vehicle front from the first pipe and the second pipe, and fixed to a dash panel; and
a lower member extending to a vehicle downward direction from a coupling member on a vehicle width direction inner side of the pair of coupling members and fixed to a vehicle body component on a floor panel side.
